# EUROPÄISCHE PATENTSCHRIFT

(11) **EP 0 908 478 B1**
(45) Veröffentlichungstag und Bekanntmachung des Hinweises auf die Patenterteilung: **11.05.2005**
(21) Anmeldenummer: 98118125.8
(22) Anmeldetag: 24.09.1998
(51) Int. Cl.: C08G 18/28

(54) **Verfahren zur Herstellung von Polyurethan-Weichschaumstoffen**
Preparation process for flexible polyurethane foams
Procédé de préparation de mousses flexibles de polyuréthane

(30) Priorität: 10.10.1997 DE 19744747
(43) Veröffentlichungstag der Anmeldung: 14.04.1999
(73) Patentinhaber: BASF AKTIENGESELLSCHAFT, 67056 Ludwigshafen (DE)
(72) Erfinder: Bruchmann, Bernd Dr., 67251 Freinsheim (DE); Lutter, Heinz-Dieter Dr., 69151 Neckargemünd (DE)

(56) Entgegenhaltungen:
- EP-A- 0 716 110
- US-A- 4 795 796
- US-A- 5 112 879

## Beschreibung

Die Erfindung betrifft ein Verfahren zur Herstellung von Polyurethan-Weichschaumstoffen mit sehr guten elastischen, insbesondere viskoelastischen Eigenschaften.

Die Herstellung von Polyurethan-Weichschaumstoffen durch Umsetzung von Polyisocyanaten und Verbindungen mit mindestens zwei aktiven Wasserstoffatomen, häufig als Polyolkomponente bezeichnet, ist seit langem bekannt und vielfach in der Literatur beschrieben.

US-A-5112879 offenbart flexible Polyurethanschäume, hergestellt aus einem Polyol, einem organischen Polyisocyanat und Glycer in carbonat

Neuerdings werden im Automobilbau Polyurethan-Weichschaumstoffe verlangt, die eine ausgezeichnete Körperschall-, Luftschall- und Energieabsorption aufweisen müssen. Derartige Schaumstoffe werden für dämmende und dämpfende Elemente eingesetzt.

Auch im orthopädischen Bereich werden für Sitzkissen und Matratzen Schaumstoffe mit einem ähnlichen Eigenschaftsprofil verlangt. Bei herkömmlichen Weichschäumen kommt es auf Grund der Elastizität zu einer punktförmigen Sitz- und Liegebelastung, die ursächlich für das Wundsitzen und -liegen ist. Viskoelastische Schaumstoffe wirken einer punktförmigen Belastung entgegen, indem sich der Schaum den Körperkonturen anpasst.

Eine wesentliche Größe für die Bestimmung der viskoelastischen Eigenschaften ist der Verlustfaktor, der eine Kennzahl für die Absorption von Energie, beispielsweise Körperschall, in einem genormen Volumenelement darstellt.

Eine gezielte Abstimmung des Verlustfaktors für die jeweilige Anwendung ist nur sehr aufwendig durchzuführen.

Aufgabe der Erfindung war es daher, Polyurethan-Weichschaumstoffe zu entwickeln, bei denen der Verlustfaktor bei weitgehender Konstanz der übrigen Parameter gezielt eingestellt werden kann.

Die Aufgabe konnte überraschenderweise gelöst werden, indem der Polyolkomponente geringe Mengen, vorzugsweise 2 bis 10 Gew.-%, bezogen auf das Gewicht der Polyolkomponente, an mindestens ein aktives Wasserstoffatom enthaltenden cyclischen oder heterocyclischen Verbindungen, ausgewählt aus der Gruppe der Cycloaliphaten, Aromaten, Imidazole, Oxazoline, Oxazolidine, Morpholine, Piperidine, Pyrrolidinone, cyclischen Acetale und cyclischen Ketal insbesondere cyclischen Acetalen und/oder Ketalen zugesetzt werden.

Gegenstand der Erfindung ist demzufolge ein Verfahren zur Herstellung von viskoelastischen Polyurethan-Weichschaumstoffen, durch Umsetzung von Polyisocyanaten mit Verbindungen mit mindestens zwei reaktiven Wasserstoffatomen, dadurch gekennzeichnet, daß die Verbindungen mit mindestens zwei reaktiven Wasserstoffatomen geringe Mengen, vorzugsweise 2 bis 10 Gew.-%, bezogen auf das Gewicht der Verbindungen mit mindestens zwei aktiven Wasserstoffatomen, an mindestens ein aktives Wasserstoffatom enthaltenden cyclischen oder heterocyclischen Verbindungen, ausgewählt aus der Gruppe der Cycloaliphaten, Aromaten, Imidazole, Oxazoline, Oxazolidine, Morpholine, Piperidine, Pyrrolidinone, cyclischen Acetale und cyclischen Ketal insbesondere cyclischen Acetalen und/oder Ketalen enthalten.

Die erfindungsgemäßen cyclischen monofunktionellen Verbindungen sind z.B.
- cycloaliphatische Alkohole, wie Cyclopentanol, Cyclohexanol, Cycloheptanol, Cyclooctanol, Cyclopentanmethanol, Cyclohexanmethanol oder Menthol,
- aromatische Alkohole, wie Benzylalkohol oder 4-Tert.Butylbenzylalkohol,
- alkoxylierte Phenole, wie Hydroxyethylphenylether.
- cycloaliphatische Amine, wie N-Methylcyclohexylamin

Monofunktionelle heterocyclische Verbindungen sind z.B.
- OH-funktionelle Imidazole, wie N-(2-Hydroxyethyl)imidazol,
- OH-funktionelle Oxazolidine, wie N-(2-Hydroxyethyl)-2-isopropyl-1,3-oxazolidin,
- OH-funktionelle Morpholine, wie N-(2-Hydroxyethyl)morpholin,
- OH-funktionelle Piperidine, wie N-(2-Hydroxyethyl)piperidin oder 4-Hydroxy-1-methylpiperidin,
NH-funktionelle Verbindungen, wie Morpholin, Piperidin oder N-(3-Aminopropyl)imidazol
vorzugsweise
- OH-funktionelle Pyrrolidinone, wie N-(2-Hydroxyethyl)-2-pyrrolidinon,
- OH-funktionelle cyclische Acetale, wie 5-Ethyl-5-hydroxymethyl-1,3-dioxan (TMP-Formal),
- OH-funktionelle cyclische Ketale, wie 2,2-Dimethyl-5-ethyl-5-hydroxymethyl-1,3-dioxan (Isopropyliden-TMP) oder 2,2-Dimethyl-4-hydroxymethyl-1,3-dioxolan (Isopropyliden-Glycerin).

Diese Cyclen oder Heterocyclen werden mit ihren funktionellen Gruppen in die Polyurethan-Matrix eingebaut. Sie üben einen signifikanten Einfluß auf den Verlustfaktor aus, ohne daß es zu einer wesentlichen Beeinflussung der übrigen Schaumeigenschaften kommt.

Die erfindungsgemäß verwendeten monofunktionellen cyclischen Acetale oder Ketale werden insbesondere durch Umsetzung von Triolen mit Aldehyden oder Ketonen hergestellt. Als Triole werden hierbei solche mit mindestens zwei benachbarten Hydroxylgruppen eingesetzt. Vorzugsweise verwendet werden Glyzerin und Trimethylolpropan (TMP). Als Aldehyde und Ketone werden insbesondere solche mit 1 bis 12 Kohlenstoffatomen, vorzugsweise Formaldehyd, Acetaldehyd, Propionaldehyd, Butyraldehyd oder Isobutyraldehyd; sowie Aceton, 2-Butanon (MEK) oder Cyclopentanon und Cyclohexanon, eingesetzt. Die Umsetzung der Aldehyde und Ketone mit den Alkoholen erfolgt beispielsweise in Lösung unter Verwendung saurer Katalysatoren, wobei das entstehende Wasser aus der Reaktionsmischung entfernt werden sollte.

Oxazolidine werden analog zu den oben erwähnten Acetalen oder Ketalen hergestellt durch Umsetzung von z.B. Diethanolamin mit Aldehyden oder Ketonen, wobei ebenfalls das entstehende Reaktionswasser entfernt wird. Siehe dazu auch E.D. Bergmann, Chem. Rev. 53(1953), 309 - 352, DE-OS 2 245636, DE-PS 2 446 438 und US 3,037,006

Es ist möglich und für viele Einsatzfälle vorteilhaft, an die freie Hydroxylgruppe der monofunktionellen cyclischen oder heterocyclischen Verbindungen Ketten anzulagern. Voraussetzung ist hierbei allerdings, daß auch die Kette eine freie Hydroxylgruppe enthält.

Besonders bevorzugt ist die Anlagerung von Polyetherketten durch Umsetzung der monofunktionellen cyclischen Verbindungen mit Alkylenoxiden, insbesondere Ethylenoxid und/oder Propylenoxid. Die Umsetzung kann nach dem allgemein bekannten Reaktionsmechanismus der basisch katalysierten Alkylenoxidanlagerung unter Verwendung von basischen, insbesondere alkalischen Katalysatoren, erfolgen. Vorzugsweise werden bis zu 10, insbesondere bis zu 5 Alkylenoxidmoleküle an die freie Hydroxylgruppe angelagert.

Die erfindungsgemäß verwendeten monofunktionellen cyclischen und heterocyclischen Verbindungen können zur Herstellung von allen viskoelastischen Polyurethan-Weichschaumstoffen eingesetzt werden, insbesondere von Blockweichschäumen und Weichformschäumen, sowohl solchen auf Basis von Diphenylmethandiisocyanat (MDI) als auch solchen auf Basis von Toluylendiisocyanat (TDI). In TDI-Blockweichschaumstoffen mit niedriger Dichte (<25 g/l) wirken diese Verbindungen zudem als Weichmacher.

Die erfindungsgemäß eingesetzten monofunktionellen cyclischen und heterocyclischen Verbindungen sind gut mit den übrigen Polyurethan-Aufbaukomponenten verträglich. Zur Herstellung von Schäumen ist es vorteilhaft, die erfindungsgemäß verwendete Verbindung zur sogenannten Polyolkomponente zu geben. Dabei handelt es sich um die Mischung aus Polyolen, ggf. Kettenverlängern und/oder Vernetzern, Katalysatoren, Treibmitteln sowie Hilfs- und/oder Zusatzstoffen. Durch den Zusatz der cyclischen Verbindungen kommt es zumeist zu einer deutlichen Viskositätssenkung und damit zu Vorteilen bei der Verarbeitung des Polyurethan-Systems.

Zu den übrigen Einsatzprodukten für das erfindungsgemäße Verfahren ist folgendes zu sagen:

Als Isocyanate werden die bekannten (cyclo)aliphatischen und insbesondere aromatischen Polyisocyanate verwendet. Besonders bevorzugt für die Herstellung von Polyurethan-Weichschäumen sind 2,4-und 2,6- Toluylendiisocyanat (TDI), zumeist als Gemisch der beiden Isomeren, sowie 4,4'-Diphenylmethan-diisocyanat (MDI), gegebenenfalls als Gemisch mit anderen Isomeren oder mit Polymethylen polyphenyl-polyisocyanaten (Polymer-MDI). An Stelle der reinen Isocyanate werden häufig modifizierte Isocyanate eingesetzt. Derartige modifizierte Isocyanate können beispielsweise entstehen durch Bildung von Urethanen, Allophanaten, Carbodiimiden, Isocyanuraten, Harnstoffen und Biureten, insbesondere jedoch durch Umsetzung der Isocyanate mit einem Unterschuß an H-funktionellen Verbindungen zu sogenannten Prepolymeren.

Als Verbindungen mit mindestens zwei reaktiven Wasserstoffatomen werden für das erfindungsgemäße Verfahren insbesondere Polyesterpolyole und Polyetherpolyole eingesetzt.

Die eingesetzten Polyetherpolyole haben zumeist eine Funktionalität von 2 bis 4, vorzugsweise 2 bis 3, und ein Molekulargewicht von 2200 bis 8000 g/mol, vorzugsweise 3600 bis 6500 g/mol. Ihre Herstellung erfolgt zumeist durch basisch, meist alkalisch, katalysierte Anlagerung niederer Alkylenoxide, zumeist Ethylenoxid und/oder Propylenoxid, an hydroxylfunktionelle Startsubstanzen. Als Startsubstanzen werden zumeist Wasser und/oder 2-oder 3-funktionelle Alkohole, wie Ethylenglykol, Propylenglykol, Glyzerin oder Trimethylolpropan (TMP) eingesetzt. Als Alkylenoxide kommen, wie erwähnt, zumeist Ethylenoxid und/oder Propylenoxid zum Einsatz. Diese können einzeln, nacheinander oder im Gemisch miteinander angelagert werden. Bei Weichschaumpolyetherolen wird zur Erhöhung der Anteils an primären Hydroxylgruppen häufig an den Kettenenden ein Ethylenoxidblock angelagert.

Die eingesetzten Polyesterpolyole werden durch Kondensation von mindestens zweifunktionellen Carbonsäuren mit mindestens zweifunktionellen Alkoholen hergestellt. Für das erfindungsgemäße Verfahren kommen insbesondere solche mit einer Funktionalität von durchschnittlich 2,0 bis 3,5, vorzugsweise 2,0 bis 2,8, und einem Molekulargewicht von durchschnittlich 800 bis 4000 g/mol, insbesondere 1500 bis 2800 g/mol, zum Einsatz.

Zu den Verbindung mit mindestens 2 mit Isocyanat reaktiven Gruppen gehören auch Kettenverlängerer und Vernetzer. Dabei handelt es sich vorzugsweise um H-funktionelle Verbindungen mit Molekulargewichten von 62 bis 400 g/mol, insbesondere 2-bis 3-funktionelle Alkohole, Amine oder Aminoalkohole. Ihre Menge beträgt insbesondere 0 bis 25, vorzugsweise 4 bis 10 Gewichtsteile, bezogen auf 100 Gewichtsteile Polyetherpolyol und/oder Polyesterpolyol.

Daneben enthalten die erfindungsgemäßen Polyurethansysteme Treibmittel, Katalysatoren sowie Hilfsmittel und/oder Zusatzstoffe.

Als Katalysatoren werden vorzugsweise die üblichen und bekannten Polyurethan-Katalysatoren eingesetzt. Hierbei handelt es sich beispielsweise um tertiäre Amine, wie Triethylendiamin, Metallsalze, wie Zinnverbindungen, sowie Mischungen aus diesen Verbindungen.

Als Treibmittel wird insbesondere Wasser verwendet, das mit Isocyanatgruppen unter Bildung von Kohlendioxid reagiert. Die Wassermenge beträgt hierbei zweckmäßigerweise 0,1 bis 8 Gew.-Teile, insbesondere 2 bis 3 Gew-Teile, bezogen auf 100 Gew-Teile der Verbindungen mit mindestens zwei mit Isocyanat reaktiven Gruppen.

Im Gemisch mit Wasser können auch physikalisch wirkende Treibmittel eingesetzt werden. Hierbei handelt es sich vorzugsweise um gegenüber den Polyurethan-Aufbaukomponenten inerte Flüssigkeiten mit Siedepunkten unter 100°C, vorzugsweise unter 50°C, insbesondere im Bereich zwischen -50 und 30°C, die unter dem Einfluß der exothermen Polyadditionsreaktion verdampfen. Beispiele für derartige Flüssigkeiten sind Kohlenwasserstoffe, wie n-, Iso- und/oder Cyclopentan, Ether, Ketone, halogenierte Konlenwasserstoffe, sofern sie kein Ozonabbaupotential aufweisen, oder Edelgase. Die Menge dieser physikalisch wirkenden Treibmittel beträgt zumeist 0 bis 30 Gew.-Teile, vorzugsweise 0 bis 20 Gew.-Teile, bezogen auf 100 Gew.-Teile der Verbindung mit mindestens 2 mit Isocyanat reaktiven Wasserstoffatomen.

Als Hilfsmittel und/oder Zusatzstoffe werden beispielsweise Flammschutzmittel, oberflächenaktive Stoffe, Stabilisatoren, Zellregler, fungistatisch und bakteriostatisch wirkende Substanzen, Farbstoffe, Pigmente und Füllstoffe verwendet. Diese Stoffe werden dem Schaumsystem bei Bedarf zugesetzt, um ihm bestimmte Eigenschaften zu verleihen.

Nähere Angaben zu den verwendeten Komponenten sind beispielsweise dem Kunststoff-Handbuch, Band VII Polyurethane, Carl-Hanser-Verlag, München, Wien, 1. bis 3. Auflage, 1966, 1983 und 1993 zu entnehmen.

Zur Herstellung der erfindungsgemäßen Polyurethan-Weichschaumstoffe werden die Ausgangsverbindungen bei Temperaturen von 0 bis 100°C, vorzugsweise 15 bis 80°C, in solchen Mengenverhältnissen zur Reaktion gebracht, daß pro NCO-Gruppe 0,5 bis 2, vorzugsweise 0,8 bis 1,3 und insbesondere ungefähr 1 reaktive(s) Wasserstoffatom(e) vorliegen und, sofern Wasser als Treibmittel eingesetzt wird, das Molverhältnis von Äquivalente Wasser zu Äquivalente NCO-Gruppe 0,5 bis 5:1, vorzugsweise 0,7 bis 0,95:1, beträgt.

Die erfindungsgemäßen Polyurethan-Weichschaumstoffe werden zweckmäßigerweise nach dem one-shot-Verfahren durch Vermischen einer Polyol- und einer Isocyanatkomponente hergestellt, wobei die Polyolkomponente die Verbindungen mit mindestens zwei mit Isocyanat reaktiven Wasserstoffatomen, mindestens eine ein reaktives Wasserstoffatom aufweisende cyclische oder heterocyclische Verbindung sowie gegebenenfalls Katalysatoren, Treibmittel sowie Hilfs- und/oder Zusatzstoffe und die Isocyanatkomponente das Polyisocyanat sowie gegebenenfalls Katalysatoren, Treibmittel sowie Hilfs- und/oder Zusatzstoffe enthält. Die beiden Komponenten werden intensiv vermischt und können in offenen oder geschlossenen Formwerkzeugen verschäumt werden.

Die erfindungsgemäßen Polyurethan-Weichschaumstoffe werden insbesondere für dämmende und dämpfende Elemente, insbesondere im Fahrzeugbau, oder für Polster-, Sitz- oder Liegemöbel eingesetzt. Sie weisen hervorragende viskoelastische Eigenschaften auf, wie aus dem hohen Verlustfaktor und der geringen Elastizität zu entnehmen ist.

Die erfindungsgemäßen Polyurethan-Systeme weisen eine verlängerte Abbinde- und Steigzeit auf, was auf eine gute Fließfähigkeit des flüssigen Systems hindeutet. Damit können auch komplexe und komplizierte Formgeometrien, wie sie bei Teilen für den Fahrzeugbau üblich sind, störungsfrei mit dem Polyurethansystem ausgefüllt und damit der Ausschuß reduziert werden. Da die erfindungsgemäß eingesetzten cyclischen Verbindungen quantitativ in das Schaumgerüst eingebaut werden, weisen die erfindungsgemäß hergestellten Schaumstoffe ein sehr geringes Foggingverhalten auf. Außerdem ist der Schrumpf dieser Schaumstoffe sehr gering.

Die Erfindung soll an folgenden Beispielen näher erläutert werden.

### Verwendete Einsatzstoffe:

Polyole:
- Polyol A: ein mit Glycerin gestartetes Polyoxypropylenpolyoxyethylentriol mit 14 % Polyoxethylengruppen (endständig), OH-Zahl= 28 mgKOH/g
- Polyol B: ein mit Glycerin gestartetes Polyoxypropylen-polyoxyethylentriol mit einer OH-Zahl von 42 mgKOH/g und einem Polyoxyethylenanteil von 75 %
- Polyol C: ein mit Ethylendiamin gestartetes Polyoxypropylenpolyol mit einer OH-Zahl von 480 mgKOH/g
- Polyol D: ein mit Glycerin gestartetes Polyoxypropylen/Polyoxyethylentriol mit 10 % Ethylenoxid-Anteil und einer OH-Zahl von 56 mgKOH/g
- Polyisocyanat:: Isocyanat-Prepolymer, bestehend aus
74.7 % Lupranat® MI (Gemisch aus 4,4'- und 2,4'-MDI),
12.4 % LUPRANAT® M20W (Polymer-MDI)
12.9 % Polyol D
Der NCO-Gehalt beträgt 28.4 Gew.-%
- Katalysator 1:: 33 %ige Lösung von Diazabicyclooctan in Dipropylenglykol
- Katalysator 2:: Bis(N,N-dimethylaminoethyl)ether, 70 %ig in Dipropylenglykol
- Stabilisator 1:: Siliconstabilisator Tegostab® B8701 der Fa. Goldschmidt, Essen.
- Stabilisator 2:: Siliconstabilisator Tegostab® B8418 der Fa. Goldschmidt, Essen

### Beispiel 1 bis 6

Einsatz von Isopropyliden-Glycerin in einem hochelastischen MDI-Blockweichschaum

Es wurden die in der Tabelle aufgeführten Polyurethansysteme zur Umsetzung gebracht. Die Umsetzung erfolgte in einer oben offenen Form mit den Maßen 40 x 40 cm. Als Isocyantkomponente wurde das oben beschriebene Polyisocyanat verwendet. Die Kennwerte der erhaltenen Schaumstoffe finden sich ebenfalls in Tabelle 1. Zum Aushärten wurde der erhaltene Weichschaum über Nacht gelagert.

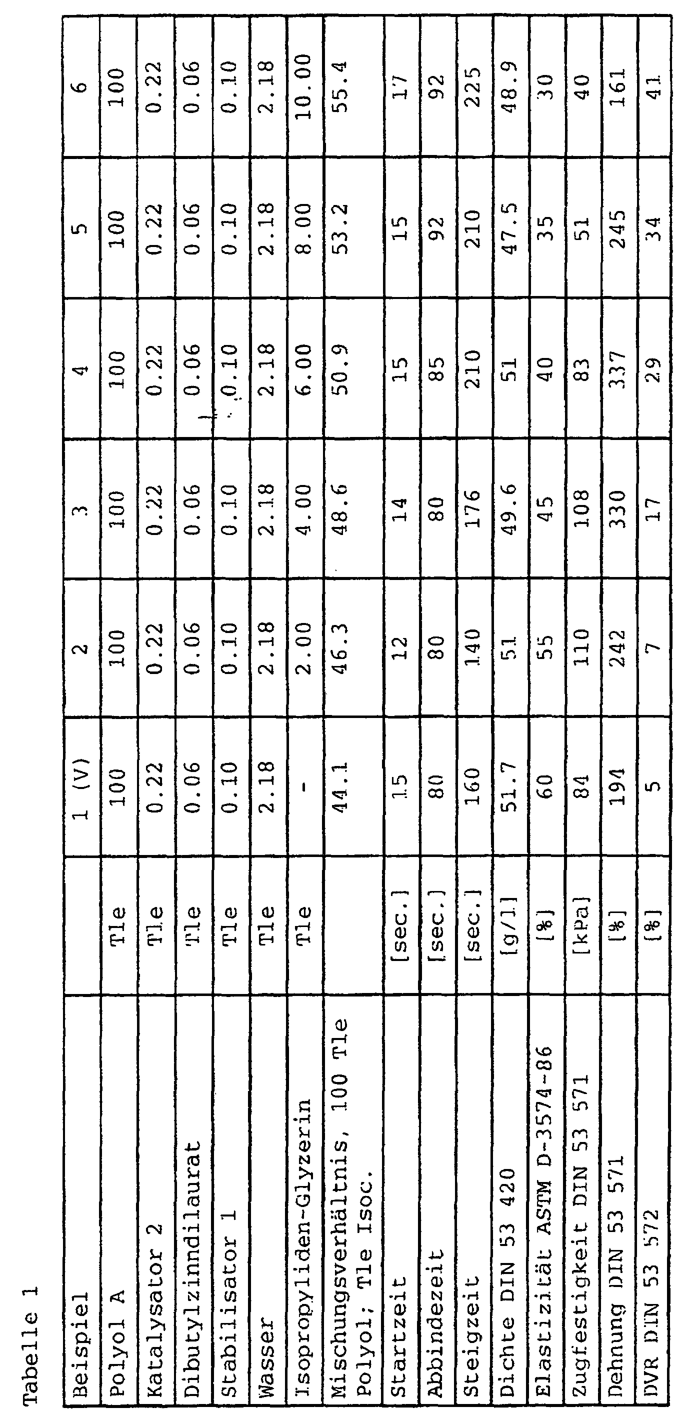

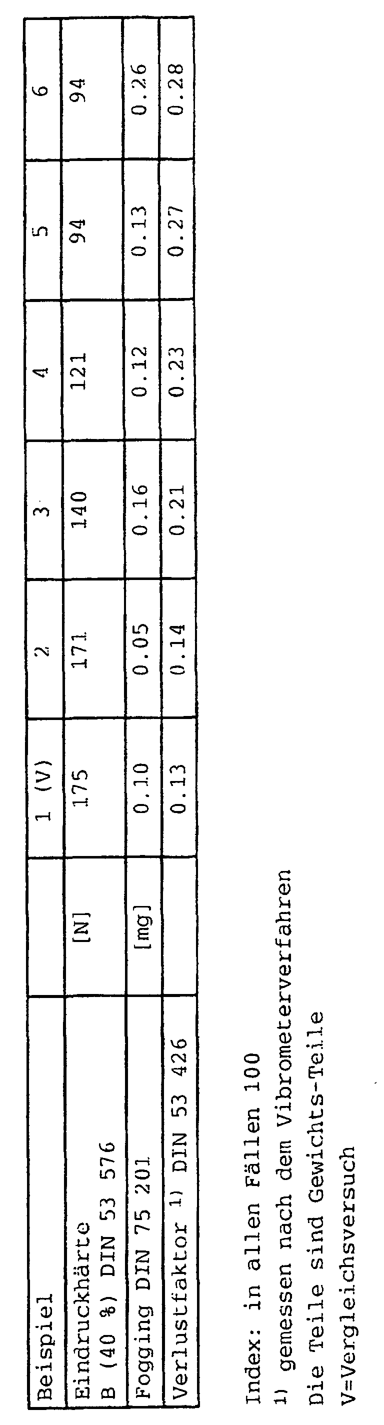

### Beispiel 7 bis 11 (Vergleich)

Es wurde verfahren wie in Beispiel 1 bis 6, jedoch wurde an Stelle von Isopropyliden-Glycerin 1-Butanol als monofunktionelle Verbindung verwendet. Die genauen Einsatzmengen und die ermittelten Kennwerte der Schäume finden sich in Tabelle 2.

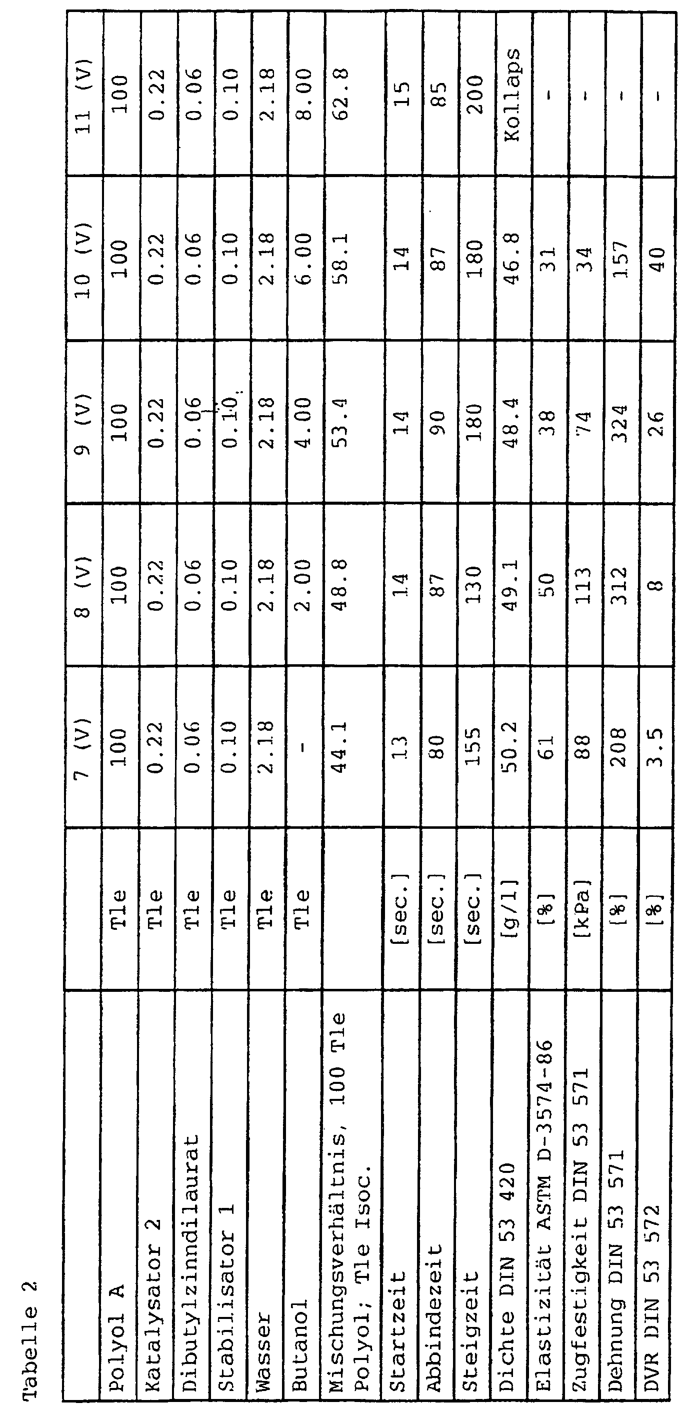

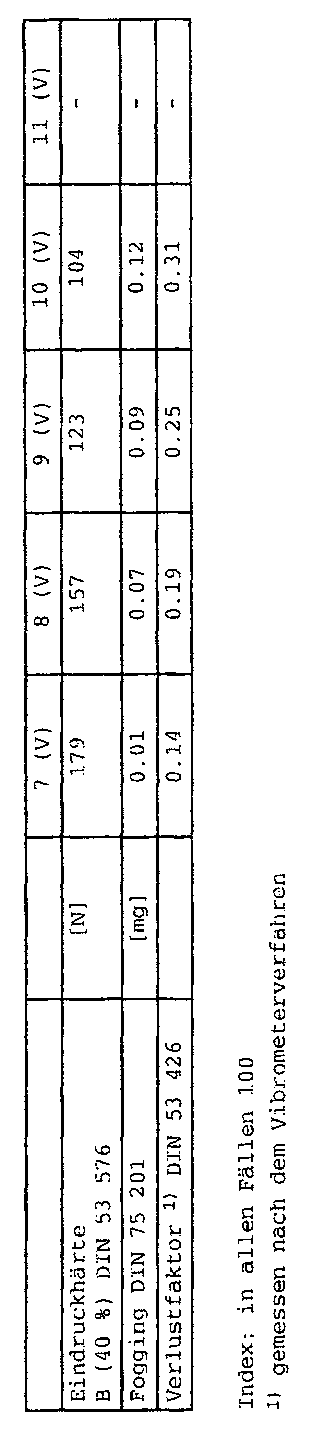

### Beispiele 12 bis 17

Einsatz von Isopropyliden-Glyzerin in einer Schaumstoffrezeptur zur Herstellung von viskoelastischen Schaumstoffen.

Die Verschäumung erfolgte wie in Beispiel 1 bis 6 beschrieben. Die genauen Einsatzmengen und die Kennwerte der Schäume finden sich in Tabelle 3.

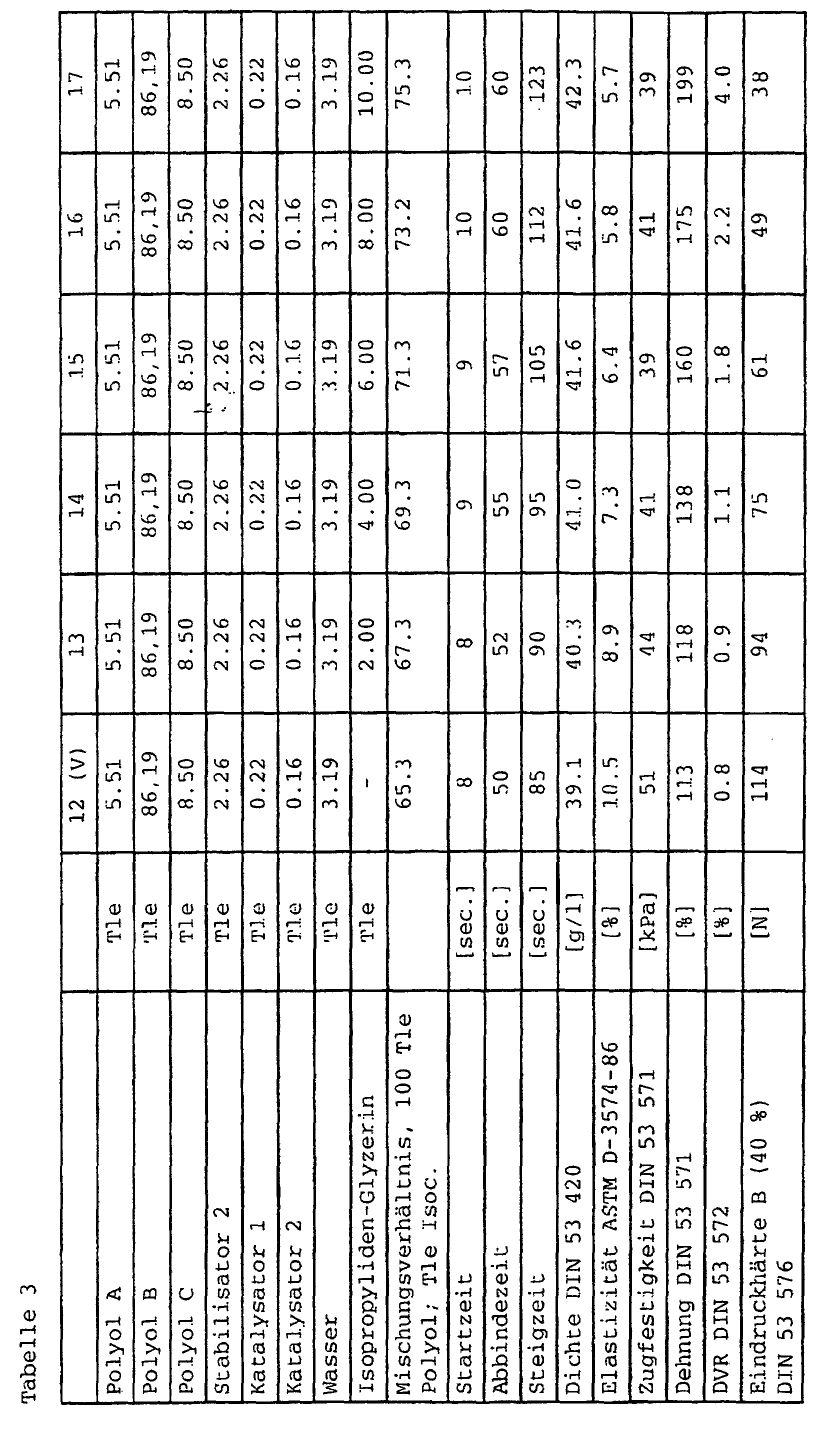

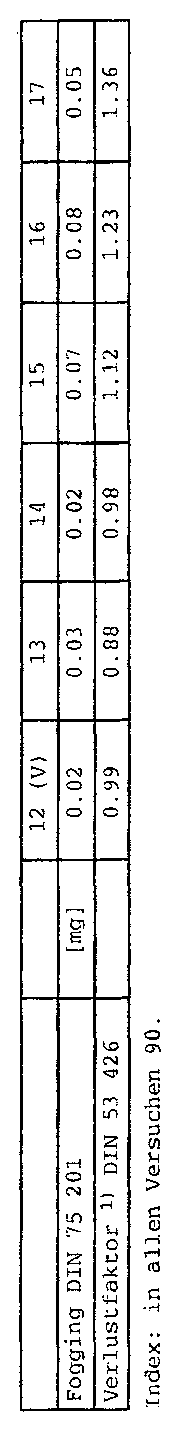

### Beispiele 18 bis 23

Einsatz von Isopropyliden-Trimethylolpropan in einer Schaumstoffrezeptur zur Herstellung viskoelastischer Schaumstoffe.

Es wurde verfahren wie in Beispiel 1 bis 6 beschrieben. Die genauen Einsatzmengen und die Kennwerte der Schäume finden sich in Tabelle 4.

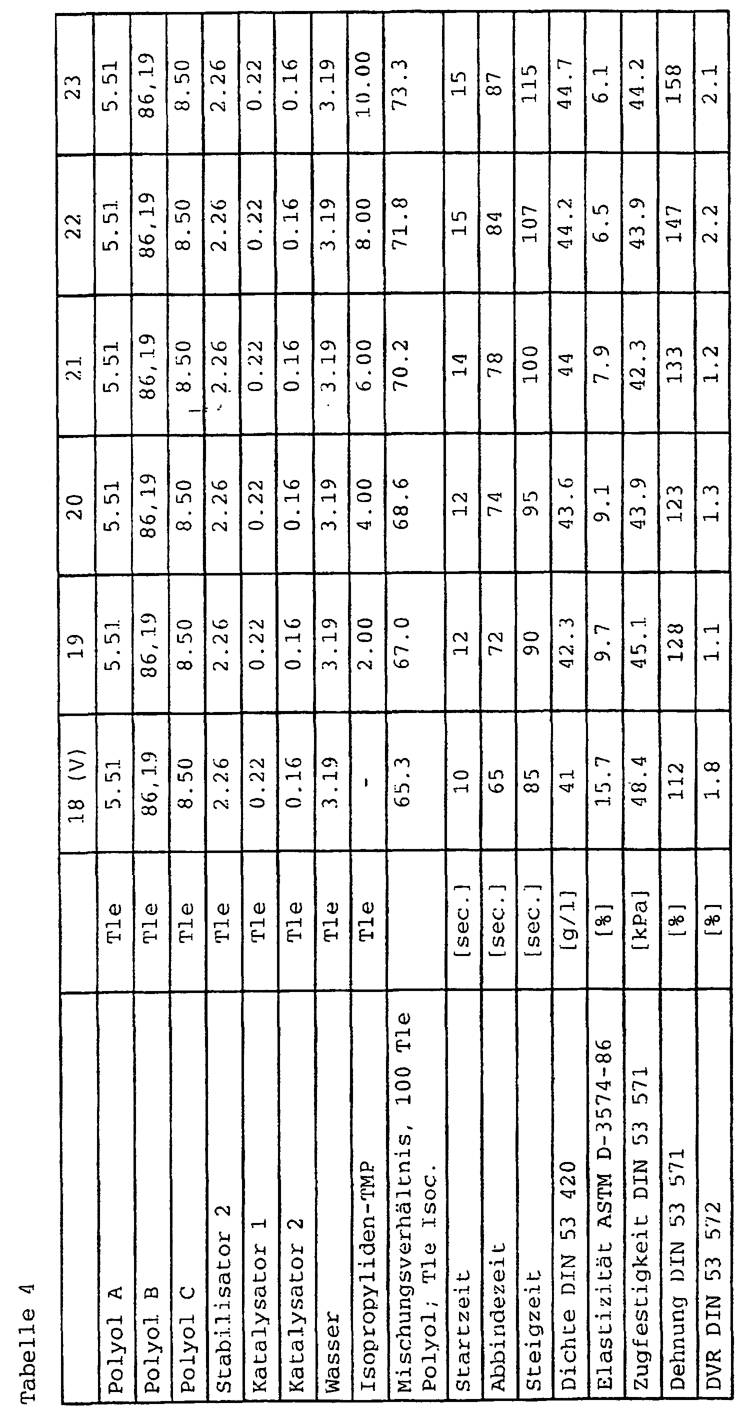

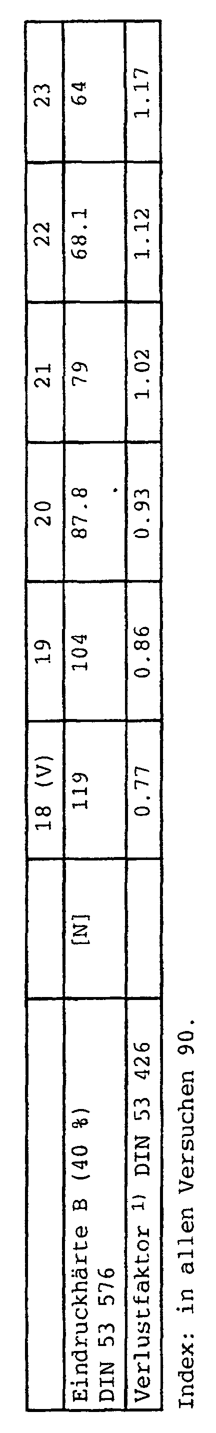

### Beispiele 24 bis 29

Einsatz von Cyclohexanol in einer Schaumstoffrezeptur zur Herstellung viskoelastischer Schaumstoffe.

Es wurde verfahren wie in Beispiel 1 bis 6 beschrieben. Die genauen Einsatzmengen und die Kennwerte der Schäume finden sich in Tabelle 5.

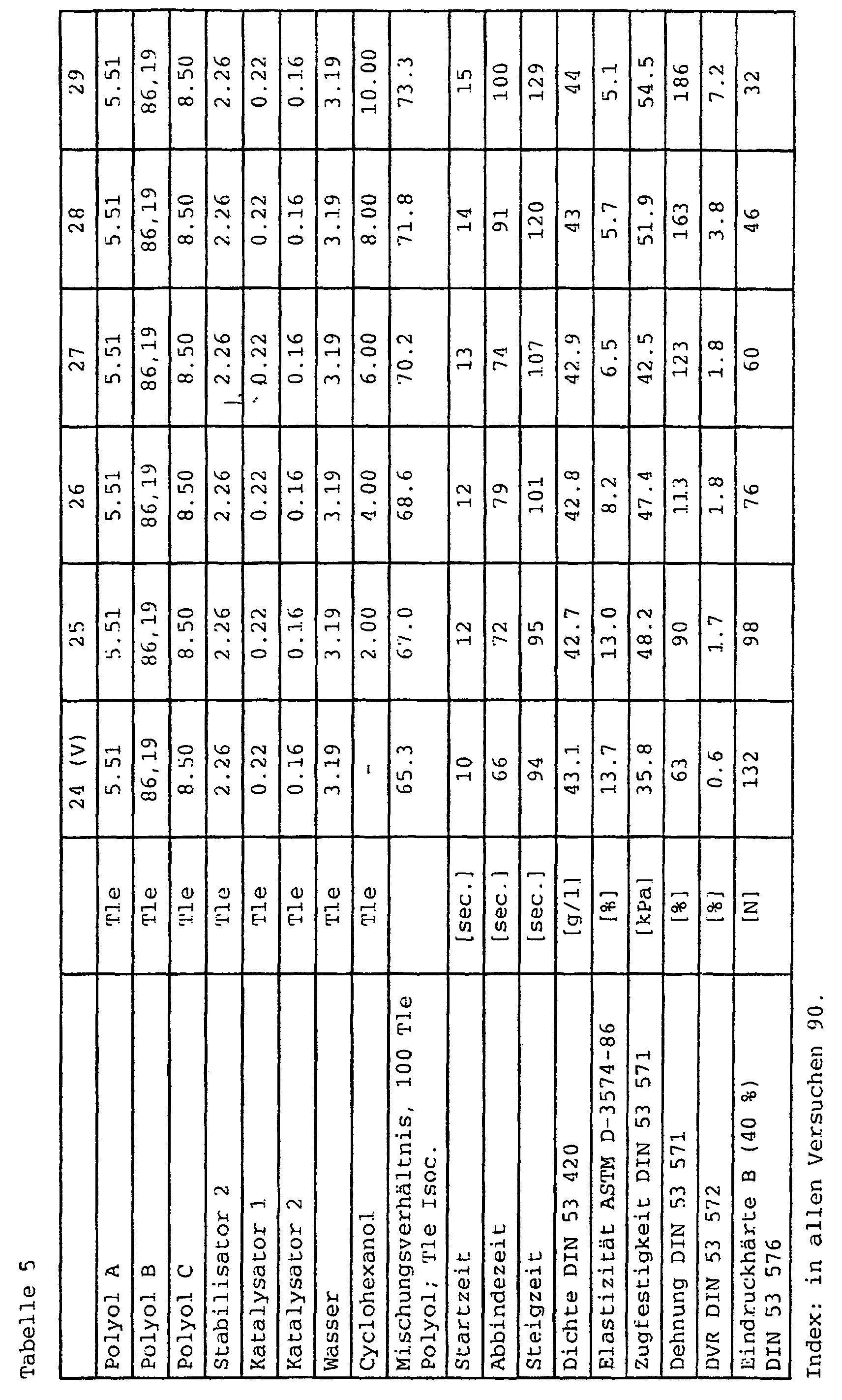

### Beispiele 30 bis 35 (Vergleich)

Einsatz von Butanol in einer Schaumstoffrezeptur zur Herstellung viskoelastischer Schaumstoffe.

Es wurde verfahren wie in den Beispielen 1 bis 6 beschrieben. Die genauen Einsatzmengen und die Kennwerte der Schaumstoffe finden sich in Tabelle 6.

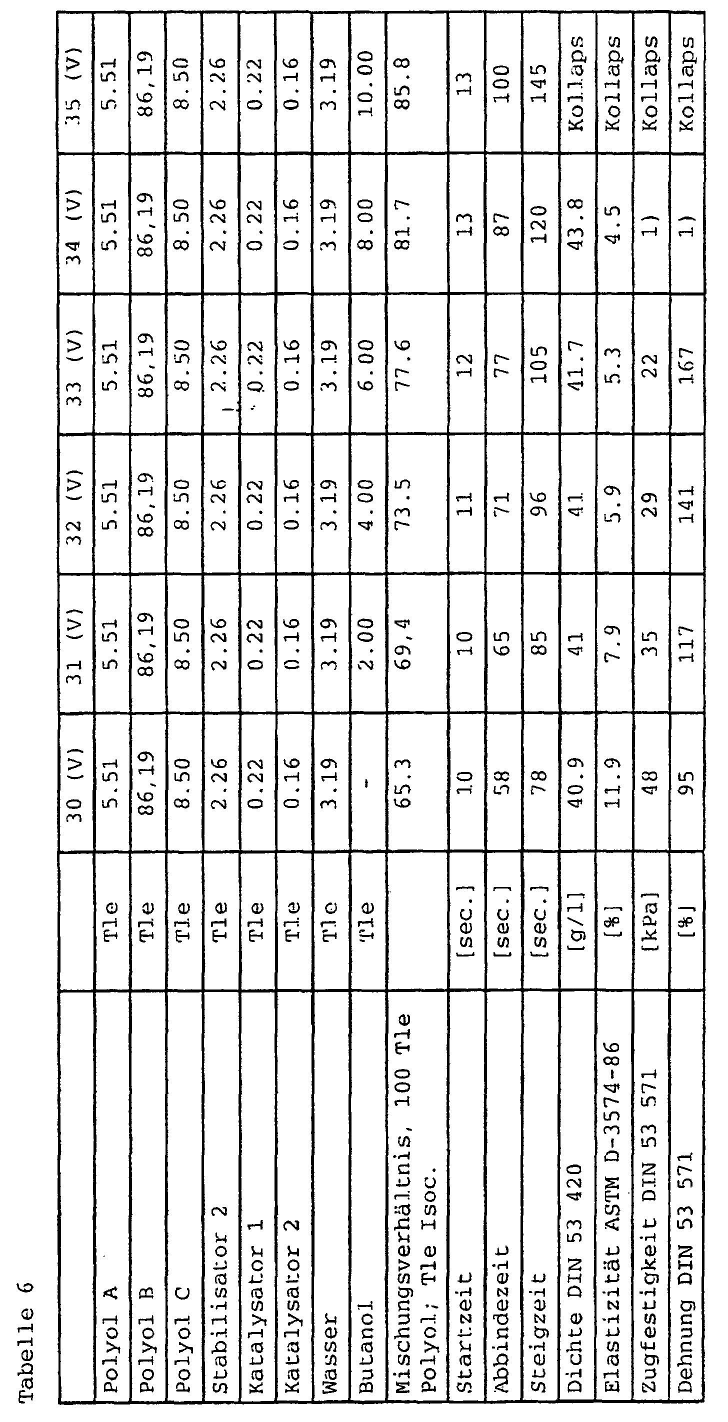

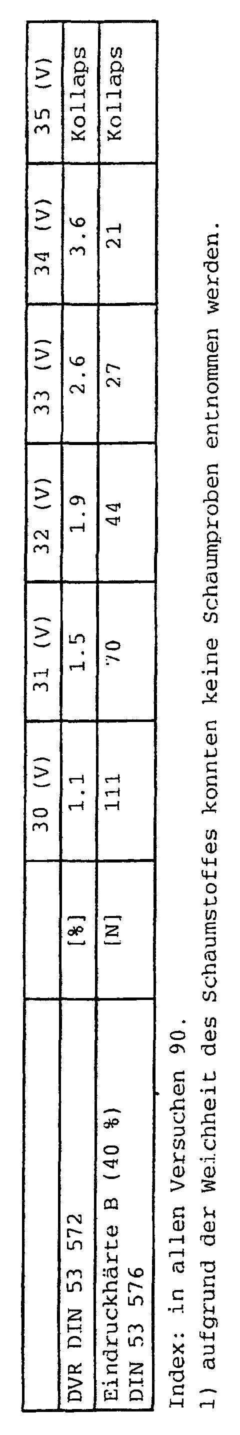

Fazit: Die erfindungsgemäßen Verbindungen verlängern die Abbinde- und Steigzeit und verbessern wesentlich die Fließfähigkeit des noch flüssigen Gemisches während der Polyaddition. In der Praxis zur Herstellung von Formschaumstoffen bedeutet dies, daß komplexe/komplizierte Formgeometrien, wie sie zum Beispiel zur Fertigung von Autositzen oder -lehnen in der Automobilindustrie durchaus üblich sind, störungsfrei mit dem Polyurethan gefüllt werden und dadurch die Zahl der Ausschußteile der Weichschäume in der Produktion deutlich reduziert werden kann.

Ein weiteres wichtiges Kriterium zur Beurteilung von Kunststoffen bildet das sogenannte Foggingverhalten. Flüchtige Rezepturbestandteile werden durch die Meßmethode der DIN 75 201 quantitativ erfaßt. Diese Methode ist heute Bestandteil fast aller Automobilhersteller-Spezifikationen.
Der quantitative Einbau der erfindungsgemäßen cyclischen oder heterocyclischen Verbindungen wird durch Messung des Fogginggehaltes unterstrichen bzw. bestätigt. Mit zunehmender Menge des Additivs in der Formulierung wird nur eine unbedeutend größere Menge des Foggingkondensates gefunden. Der Verlustfaktor - als Maß der viskoelastischen Eigenschaften gemessen - verdoppelt sich zwar sowohl nach Zusatz der erfindungsgemäßen Produkte, als auch nach Zusatz von 1-Butanol, doch sind Schaumstoffe, die mit mehr als 6 % 1-Butanol hergestellt wurden, nicht mehr dimensionsstabil und härten erst nach sehr langer Zeit aus.

### Beispiele 36 bis 42

Isopropylidenglycerin in einer TDI-Rezeptur zur Herstellung viskoelastischer Schaumstoffe.

Es wurde verfahren wie in Beispiel 1 bis 6 beschrieben, wobei als Isocyanatkomponente TDI 80/20 eingesetzt wurde. Die genauen Einsatzmengen und die Kennwerte der Schaumstoffe finden sich in Tabelle 7.

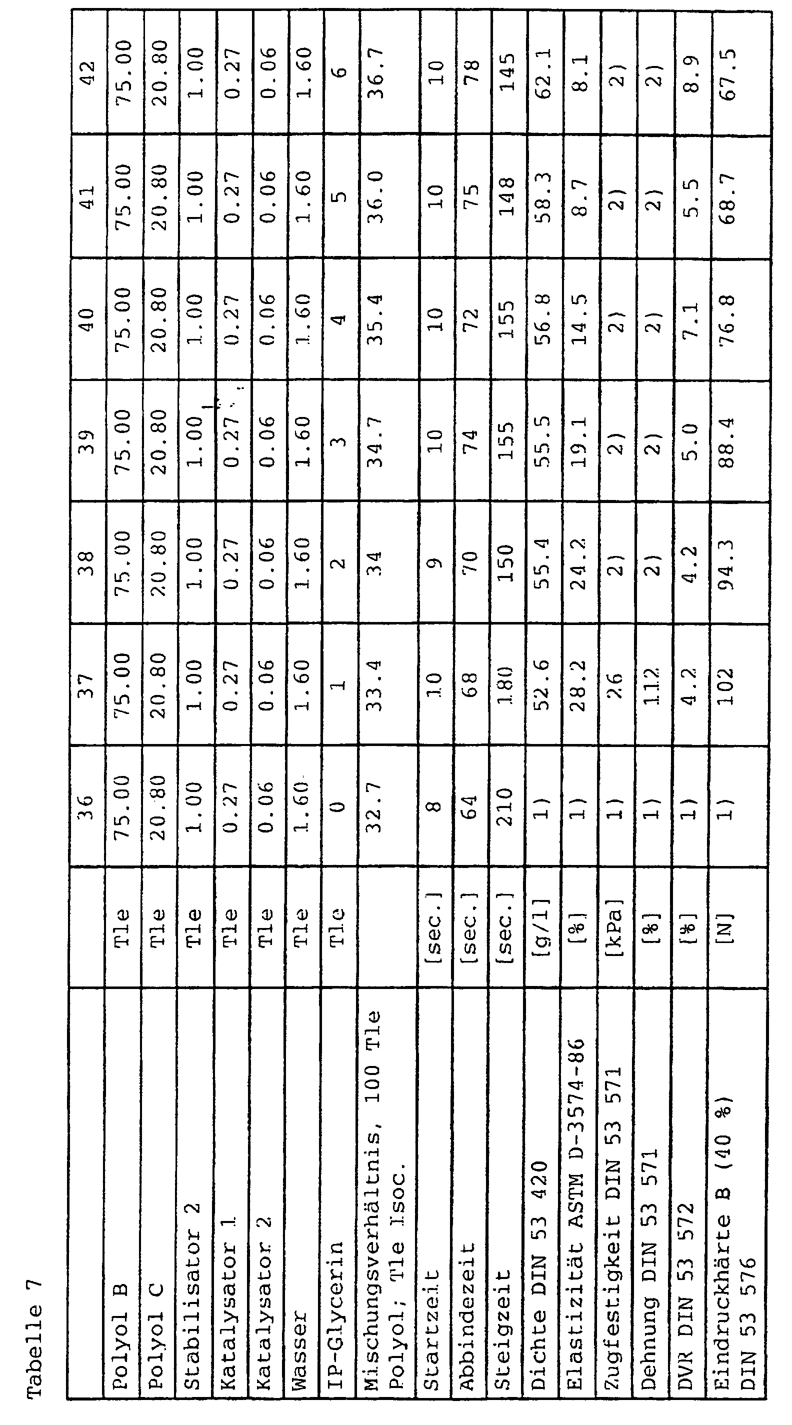

Index: in allen Versuchen 90.

Am. :
1) Der Schaumstoff aus Versuch 36 -ohne Additiv-Zusatz- zeigte deutlichen Schrumpf, weshalb keine Probekörper entnommen werden konnten
2) Zugfestigkeit und Dehnung der Schaumstoffe 38 - 42 konnten nicht gemessen werden, weil Probekörper aufgrund der geringen Härte der Schäume nicht ausgesägt werden konnten.

Isopropyliden-Glycerin verbessert deutlich die erforderliche Offenzelligkeit der Blockschaumstoffe und verhindert damit einen Dimensionsstabilitätsverlust.
Die mit steigender Menge Isopropyliden-Glycerin abnehmende Elastizität der Schaumstoffe macht deutlich, daß die gewünschten dämpfenden Eigenschaften verbessert werden.

## Patentansprüche

1. Verfahren zur Herstellung von Polyurethan-Weichschaumstoffen durch an sich bekannte Umsetzung von Polyisocyanaten mit Verbindungen, die mindestens zwei mit Isocyanat reaktive Wasserstoffatome aufweisen, **dadurch gekennzeichnet, daß** die Umsetzung in Gegenwart von mindestens ein reaktives Wasserstoffatom aufweisenden cyclischen oder heterocyclischen Verbindungen, ausgewählt aus der Gruppe der Cycloaliphaten, Aromaten, Imidazole, Oxazoline, Oxazolidine, Morpholine, Piperidine, Pyrrolidine, Pyrrolidinone, cyclischen Acetale und cyclischen Ketale durchgeführt wird.

2. Verfahren nach einem der Ansprüche 1, **dadurch gekennzeichnet, daß** die cyclischen oder heterocyclischen Verbindungen eine Hydroxylgruppe aufweisen.

3. Verfahren nach Anspruch 1 bis 2, **dadurch gekennzeichnet, daß** die mindestens ein reaktives Wasserstoffatom aufweisenden cyclischen oder heterocyclischen Verbindungen in einer Menge von 0,5 bis 10 Gew.-Teilen, bezogen auf 100 Gew.-Teile der Verbindung mit mindestens zwei mit Isocyanat reaktiven Wasserstoffatomen, eingesetzt werden.

4. Verfahren nach einem der Ansprüche 1 bis 3, **dadurch gekennzeichnet, daß** die mindestens ein reaktives Wasserstoffatom aufweisenden cyclischen oder heterocyclischen Verbindungen eine mindestens eine Hydroxylgruppe tragende Polyetherkette aufweisen.

5. Verfahren nach einem der Ansprüche 1 bis 4, **dadurch gekennzeichnet, daß** als mindestens ein reaktives Wasserstoffatom aufweisende cyclische oder heterocyclische Verbindungen Umsetzungsprodukte von Glyzerin und/oder Trimethylolpropan mit Aldehyden und/oder Ketonen mit 1 bis 12 Kohlenstoffatomen in der Hauptkette eingesetzt werden.

6. Hochelastische und viskoelastische Polyurethan-Weichschaumstoffe, herstellbar nach einem der Ansprüche 1 bis 5.

7. Verwendung von mindestens ein reaktives Wasserstoffatom aufweisenden cyclischen oder heterocyclischen Verbindungen, ausgewählt aus der Gruppe der Cycloaliphaten, Aromaten, Imidazole, Oxazoline, Oxazolidine, Morpholine, Piperidine, Pyrrolidine, Pyrrolidinone, cyclischen Acetale und cyclischen Ketale zur Herstellung von hochelastischen und viskoelastischen Polyurethan-Weichschaumstoffen.

## Claims

1. A process for producing flexible polyurethane foams by the reaction known per se of polyisocyanates with compounds containing at least two hydrogen atoms which react with isocyanate, wherein the reaction is carried out in the presence of cyclic or heterocyclic compounds which contain at least one reactive hydrogen atom and are selected from the group consisting of cycloaliphatics, aromatics, imidazoles, oxazolines, oxazolidines, morpholines, piperidines, pyrrolidines, pyrrolidinones, cyclic acetals and cyclic ketals.

2. A process as claimed in claim 1, wherein the cyclic or heterocyclic compounds contain a hydroxyl group.

3. A process as claimed in any of claims 1 and 2, wherein the cyclic or heterocyclic compounds which contain at least one reactive hydrogen atom are used in an amount of from 0.5 to 10 parts by weight, based on 100 parts by weight of the compound containing at least two hydrogen atoms which react with isocyanate.

4. A process as claimed in any of claims 1 to 3, wherein the cyclic or heterocyclic compounds which contain at least one reactive hydrogen atom have a polyether chain bearing at least one hydroxyl group.

5. A process as claimed in any of claims 1 to 4, wherein the cyclic or heterocyclic compounds which contain at least one reactive hydrogen atom which are used are reaction products of glycerol and/or trimethylolpropane with aldehydes and/or ketones having from 1 to 12 carbon atoms in the main chain.

6. A highly elastic or viscoelastic flexible polyurethane foam which can be produced as claimed in any of claims 1 to 5.

7. The use of cyclic or heterocyclic compounds which contain at least one reactive hydrogen atom and are selected from the group consisting of cycloaliphatics, aromatics, imidazoles, oxazolines, oxazolidines, morpholines, piperidines, pyrrolidines, pyrrolidinones, cyclic acetals and cyclic ketals for producing highly elastic and viscoelastic flexible polyurethane foams.

## Revendications

1. Procédé de préparation de mousses souples de polyuréthanne par une réaction connue en soi de polyisocyanates avec des composés qui présentent au moins deux atomes d'hydrogène réactifs avec de l'isocyanate, **caractérisé en ce que** la réaction est effectuée en présence de composés cycliques ou hétérocycliques présentant au moins un atome d'hydrogène réactif, choisis parmi le groupe des substances cycloaliphatiques, des substances aromatiques, des imidazoles, des oxazolines, des oxazolidines, des morpholines, des pipéridines, des pyrrolidines, des pyrrolidinones, des acétals cycliques et des cétals cycliques.

2. Procédé suivant la revendication 1, **caractérisé en ce que** les composés cycliques ou hétérocycliques présentent un groupe hydroxy.

3. Procédé suivant la revendication 1 ou 2, **caractérisé en ce que** les composés cycliques ou hétérocycliques présentant au moins un atome d'hydrogène réactif sont mis en oeuvre en une quantité de 0,5 à 10 parties en poids, par rapport à 100 parties en poids du composé présentant au moins deux atomes d'hydrogène réactifs avec de l'isocyanate.

4. Procédé suivant l'une des revendications 1 à 3, **caractérisé en ce que** les composés cycliques ou hétérocycliques présentant au moins un atome d'hydrogène réactif présentent une chaîne de polyéther portant au moins un groupe hydroxy.

5. Procédé suivant l'une des revendications 1 à 4, **caractérisé en ce que**, comme composés cycliques ou hétérocycliques présentant au moins un atome d'hydrogène réactif, on met en oeuvre des produits de la réaction de glycérine et/ou de triméthylolpropane avec des aldéhydes et/ou des cétones comportant 1 à 12 atomes de carbone dans la chaîne principale.

6. Mousses souples de polyuréthanne fortement élastiques et viscoélastiques, que l'on peut préparer suivant l'une des revendications 1 à 5.

7. Utilisation de composés cycliques ou hétérocycliques présentant au moins un atome d'hydrogène réactif, choisis parmi le groupe des substances cycloaliphatiques, des substances aromatiques, des imidazoles, des oxazolines, des oxazolidines, des morpholines, des pipéridines, des pyrrolidines, des pyrrolidinones, des acétals cycliques et des cétals cycliques, pour la fabrication de mousses souples de polyuréthanne fortement élastiques et viscoélastiques.
